# EUROPÄISCHE PATENTSCHRIFT

(11) **EP 2 473 721 B1**
(45) Veröffentlichungstag und Bekanntmachung des Hinweises auf die Patenterteilung: **27.07.2016**
(21) Anmeldenummer: 10743159.5
(22) Anmeldetag: 19.08.2010
(51) Int. Cl.: F01N 3/20

(54) **FÖRDERVORRICHTUNG FÜR EIN REDUKTIONSMITTEL MIT KOMPENSATIONSELEMENT**
REDUCING AGENT SUPPLY DEVICE COMPRISING A COMPENSATION ELEMENT
DISPOITIF D'AJOUT D'UN AGENT RÉDUCTEUR AVEC UN ÉLÉMENT DE COMPENSATION

(30) Priorität: 02.09.2009 DE 102009039735
(43) Veröffentlichungstag der Anmeldung: 11.07.2012
(73) Patentinhaber: Continental Automotive GmbH, 30165 Hannover (DE)
(72) Erfinder: HODGSON, Jan, 53840 Troisdorf (DE); SCHEPERS, Sven, 53844 Troisdorf (DE)
(86) Internationale Anmeldenummer: PCT/EP2010/062076
(87) Internationale Veröffentlichungsnummer: WO 2011/026733

(56) Entgegenhaltungen:
- EP-A1- 1 553 270
- EP-A1- 1 602 805
- WO-A1-2010/023124

## Beschreibung

Die vorliegende Erfindung betrifft eine Fördervorrichtung zur Förderung von flüssigem Reduktionsmittel aus einem Reduktionsmitteltank in ein Abgasreinigungssystem, wobei die Fördervorrichtung ein spezielles Kompensationselement beinhaltet.

Im Hinblick auf geltende und in naher Zukunft weiter verschärfte Emissionsgrenzwerte für Abgase von Verbrennungsmotoren werden in Nutz- und Kraftfahrzeugen im verstärkten Maße SCR-Systeme zur Abgasreinigung eingesetzt. Dabei wird Reduktionsmittel in verschiedener Ausführung eingesetzt, insbesondere in Form von Reduktionsmittelvorläufern, die als wasserhaltige Lösung vorliegen (Denoxium, AdBlue). AdBlue ist der Handelsname einer verfügbaren Harnstoff-Wasser-Lösung mit einem Harnstoffanteil von ca. 32,5 Gewichtsprozent. Beim Einsatz der SCR-Technologie ist zu beachten, dass bei niedrigen Umgebungstemperaturen oder auch durch Abkühlungseffekte infolge von Konvektion ein Einfrieren des Reduktionsmittels möglich ist. Eine wässrige Harnstoff-Wasser-Lösung friert typischerweise bei Temperaturen unterhalb von -11 C ein. Durch die Volumenvergrößerung infolge des Phasenübergangs des Reduktionsmittels von flüssig zu fest können Komponenten des SCR-Systems, zum Beispiel Filter, Reduktionsmittelleitungen oder Ventile der Fördereinrichtung, beschädigt werden.

Als Lösung für dieses bekannte Problem wurde vorgeschlagen, flexible Reduktionsmittelleitungen oder Reduktionsmittelleitungen mit Volumenkompensationselementen zur Kompensation der Ausdehnung vorzusehen, die infolge des Eisdrucks des gefrorenen Reduktionsmittels bzw. des Reduktionsmittelvorläufers, das Volumen von Reduktionsmittelleitungen vergrößern. Dies konnte aber noch nicht zu einem bauteilgerechten, kostengünstigen und sicheren Schutz entwickelt werden.

Aus der EP-A1-1 602 805 ist eine Vorrichtung zum Heizen eines Reduktionsmittels bekannt. Diese Vorrichtung weist eine Förderleitung auf, welche elastisch ausgebildet sein kann, um eine Volumenausdehung des Reduktionsmittels beim Einfrieren zuzulassen.

Es ist Aufgabe der hier vorliegenden Erfindung, eine gegenüber dem Stand der Technik weiter verbesserte Fördervorrichtung für Reduktionsmittel mit einem Kompensationselement anzugeben, wobei das Kompensationselement die Gefahren durch das Einfrieren für die Fördervorrichtung weiter reduziert. Des Weiteren soll ein gezieltes Einfrierverfahren für eine solche Fördervorrichtung vorgeschlagen werden.

Diese Aufgaben werden gelöst mit einer Fördervorrichtung gemäß den Merkmalen des Patentanspruchs 1 und einem Verfahren gemäß den Merkmalen des Patentanspruchs 11. Weitere vorteilhafte Ausgestaltungen der Vorrichtung sind in den abhängig formulierten Patentansprüchen angegeben. Die in den Patentansprüchen einzeln angeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung ist eine Vorrichtung zur Förderung von flüssigem Reduktionsmittel mit zumindest einem ersten Kompensationselement, wobei die Fördervorrichtung zur Förderung, Leitung und Zugabe eines Reduktionsmittels wenigstens einen Reduktionsmitteltank, eine Fördereinheit sowie eine Reduktionsmittelleitung und eine Zugabeeinheit umfasst, die zusammen ein mit Reduktionsmittel befüllbares Gesamtvolumen aufweisen, wobei das mindestens eine erste Kompensationselement dazu geeignet ist, das Gesamtvolumen bei einem Unterdruck in der Fördervorrichtung zu verkleinern.

Mit einem Unterdruck ist im Sinne der hier vorliegenden Erfindung ein Unterdruck gegenüber dem Umgebungsdruck gemeint. Genauso ist mit einem Überdruck ein Überdruck gegenüber dem Umgebungsdruck gemeint.

Der vorliegenden Erfindung liegt die Erkenntnis zugrunde, dass vor dem Einfrieren eines Reduktionsmittels in einer Fördervorrichtung immer ein Abkühlen des Reduktionsmittels stattfindet und bei diesem Abkühlen eine Volumenreduktion des Reduktionsmittels auftritt. Messungen bei einer wässrigen Harnstofflösung haben ergeben, dass beim Abkühlen des Reduktionsmittels von 20° C auf 0°C bereits eine signifikante Volumenreduktion auftritt. Bei aus dem Stand der Technik bekannten Fördervorrichtungen bildet sich aufgrund dieser Volumenreduktion in der Fördervorrichtung ein Unterdruck, welcher durch die Ventile der Fördereinheit für Reduktionsmittel hindurch zusätzliches Reduktionsmittel aus dem Reduktionsmitteltank in die Fördervorrichtung fördert. Hierdurch wird der Befüllungsgrad der Fördervorrichtung beim Abkühlen erhöht. Wenn so weit abgekühltes Reduktionsmittel weiter abkühlt, beginnt es bei Temperaturen von ca. -11°C einzufrieren. Hierbei findet nun eine Volumenzunahme statt, die größer ist, als die zuvor beim Abkühlen stattfindende Volumenreduktion. Diese Volumenzunahme führt zu einem erhöhten Druck in der Fördervorrichtung. Diese Druckerhöhung ist umso größer, je mehr zusätzliches Reduktionsmittel während der Volumenreduktion beim Abkühlen durch die Fördereinheit zusätzlich in die Fördervorrichtung gesaugt wurde. Durch das erfindungsgemäße Kompensationselement kann die Menge an zusätzlichem Reduktionsmittel in der Fördervorrichtung reduziert oder sogar komplett vermieden werden, so dass in einer erfindungsgemäßen Fördervorrichtung weniger Maßnahmen getroffen werden müssen, damit die Fördervorrichtung dem Eisdruck standhält.

Die Fördervorrichtung reduziert ihr Volumen nicht, solange in der Fördervorrichtung kein Unterdruck vorliegt und das erste Kompensationselement ermöglicht bei Vorliegen eines Unterdrucks sehr schnell und sehr leicht eine Volumenreduktion. Auf diese Art und Weise kann sichergestellt werden, dass die Fördervorrichtung sich im Betriebsbereich, also bei Drücken oberhalb von 0 bar, im Wesentlichen inkompressibel verhält. Hierdurch kann eine hohe Gleichmäßigkeit des von der Fördervorrichtung bereitgestellten Reduktionsmitteldrucks erreicht werden. Gleichzeitig wird für eine elastische Dehnung der Fördervorrichtung in Folge eines Druckanstieges im Betrieb keine unnötige Energie verbraucht.

Weiterhin besonders vorteilhaft ist die erfindungsgemäße Fördervorrichtung, wenn das mindestens eine erste Kompensationselement nach Art einer Membran ausgeführt ist, für die eine Anlagefläche vorgesehen ist, die so ausgebildet ist, dass die Membran bei Überdruck in der Fördervorrichtung im Wesentlichen unbeweglich an dieser Anlagefläche anliegt und die Membran bei einem Unterdruck in der Fördervorrichtung in das Gesamtvolumen hinein bewegbar ist.

Die Anlagefläche kann beispielsweise ein Abschnitt einer inneren Wandung einer Leitung der Fördervorrichtung sein.

In der Anlagefläche hinter der Membran kann beispielsweise eine Bohrung vorgesehen sein, durch welche bei einem Unterdruck in der Fördervorrichtung leicht Luft oder dergleichen zwischen die Membran und die Anlagefläche gelangt. So füllt die Luft, welche durch die Membran von dem Gesamtvolumen der Fördervorrichtung abgetrennt ist, einen Teil des Gesamtvolumens in der Fördervorrichtung aus. Die Membran ist bei einem Unterdruck bevorzugt sehr leicht verformbar, weil die große Fläche der relativ dünnen Membran sich leicht verbiegen kann. Bei einem Überdruck wird die Membran gegen die Anlagefläche gedrückt. Eine Bewegung der Membran ist dann z. B. nur im Bereich der beschriebenen Bohrung in der Anlagefläche möglich. Diese Bohrung ist allerdings im Vergleich zur Anlagefläche, an der die Membran anliegt, sehr klein. Über die sehr kleine Fläche der Bohrung betrachtet, ist die Membran relativ steif, obwohl sie dort dieselbe Dicke wie in den übrigen Bereichen aufweist. Aus diesem Grund kann sich die Membran in die Bohrung hinein nicht nennenswert ausdehnen, so dass keine nennenswerte Zunahme des Gesamtvolumens bei Überdrücken im System entsteht.

Alternativ zu einer Bohrung könnte hinter der Membran auch ein Gitter vorgesehen sein. Auch dann ist eine leichte Ausdehnung der Membran in das Gesamtvolumen hinein möglich, während die Membran bei einem Überdruck im System an dem Gitter anliegt und ein Ausdehnen der Membran in die einzelnen Öffnungen des Gitters hinein nicht in einem wesentlichen Maße stattfindet.

Auch wäre es möglich, die Membran teilweise mit unterschiedlichen Dicken auszuführen. Der Bereich der Membran, der über der Bohrung oder dem Gitter zur Anlage kommt, könnte dicker ausgeführt sein, damit sich die anliegende Membran nicht verformt. Benachbarte Bereiche könnten dünn und flexibel, gegebenenfalls sogar mit einer Wellung, ausgeführt sein, damit hier eine leichte Beweglichkeit der Membran gegeben ist, wenn diese sich bei einem Unterdruck in das Gesamtvolumen der Fördervorrichtung hinein bewegt. Möglicherweise könnten die beweglichen Bereiche der Membran auch mit einer Wellung oder Ähnlichem ausgeführt sein, um hier eine noch weiter erhöhte Flexibilität zu gewährleisten.

Möglich ist es auch, eine Membran aus verschiedenen Materialien bereitzustellen. Entweder kann in einzelnen Bereichen der Membran ein steiferes Material mit einem höheren Elastizitätsmodul und/oder mit einer größeren Dicke verwendet werden, und/oder die Membran kann bereichsweise durch eine zusätzliche Schicht und/oder eine Versteifungsstruktur versteift werden.

Besonders vorteilhaft ist die erfindungsgemäße Fördervorrichtung, wenn das mindestens eine erste Kompensationselement eine Verkleinerung des Gesamtvolumens um bis zu maximal 5 % ermöglicht.

Experimentell wurde herausgefunden, dass beim Einfrieren von wässrigem Reduktionsmittel, ausgehend von den üblichen Betriebstemperaturen, die typischerweise 20 C oder auch bis zu 80 C betragen können, Volumenreduktionen von bis zu 5 % auftreten können. Bevorzugt ist allerdings, dass das erste Kompensationselement Volumenreduktionen um zumindest 2 % des Gesamtvolumens ermöglicht.

Weiterhin besonders vorteilhaft ist die erfindungsgemäße Fördervorrichtung, wenn das mindestens eine erste Kompensationselement eine Verkleinerung des Gesamtvolumens um bis zu 5 % bei einem Unterdruck von weniger als 500 mbar [Millibar] ermöglicht. Hier ist insbesondere bevorzugt, dass eine Volumenreduktion um bis zu 2 % bei einem Unterdruck von weniger als 500 mbar [Millibar], bevorzugt weniger als 200 mbar [Millibar], und insbesondere bevorzugt weniger als 100 mbar [Millibar], möglich ist.

Dieser Ausgestaltung der erfindungsgemäßen Fördervorrichtung liegt der Ansatz zugrunde, dass der Unterdruck in der Fördervorrichtung nicht sehr groß werden sollte, um kein zusätzliches Reduktionsmittel aus dem Reduktionsmitteltank in die Fördervorrichtung hineinzusaugen. Bei geringen Unterdrücken im System ist es weniger wahrscheinlich, dass dies auftritt bzw. es sind keine oder weniger Maßnahmen zu treffen, um ein Ansaugen von Reduktionsmittel aus dem Reduktionsmitteltank zu vermeiden. In einer Ansaugleitung zum Ansaugen von Reduktionsmittel aus einem Reduktionsmitteltank kann auch ein Strömungshindernis vorgesehen sein, welches dafür sorgt, dass Reduktionsmittel aus dem Reduktionsmitteltank nicht in die Fördervorrichtung strömt, wenn ein Abkühlen der Fördervorrichtung stattfindet. Ein solches Strömungshindernis soll lediglich sicherstellen, dass der zur Volumenreduktion mit dem ersten Kompensationselement nötige Unterdruck kleiner ist, als der Unterdruck, bei welchem zusätzliches Reduktionsmittel aus dem Reduktionsmitteltank angesaugt wird.

Es existiert mindestens ein zweites Kompensationselement, welches dazu geeignet ist, das Gesamtvolumen bei Erreichen eines Schwellüberdrucks in der Fördervorrichtung zu vergrößern, wobei das mindestens eine zweite Kompensationselement bei einem Druck unterhalb des Schwellüberdrucks im Wesentlichen keine Vergrößerung des Gesamtvolumens ermöglicht.

Ein derartiges zweites Kompensationselement (Expansionselement) vergrößert das Volumen der Fördervorrichtung somit ab einem bestimmten Schwellüberdruck. Vorher tritt bevorzugt keine nennenswerte Vergrößerung des Gesamtvolumens auf. Dies hat den Grund, dass in dem Bereich der Förderdrücke, bei denen die erfindungsgemäße Fördervorrichtung betrieben wird, sich die Fördervorrichtung möglichst starr verhalten soll, um eine besonders energieeffiziente und sichere Förderung von Reduktionsmittel zu ermöglichen. Wenn das Reduktionsmittel in der Fördervorrichtung vollständig abgekühlt ist und eine Ausdehnung des Reduktionsmittels aufgrund des Einfrierens stattfindet, treten Drücke auf, die wesentlich über den üblichen Förderdrücken liegen. Das zweite Kompensationselement erlaubt nun bei derartigen Drücken eine kontrollierte Vergrößerung des Gesamtvolumens, so dass der Eisdruck in der Fördervorrichtung keinen Schaden verursacht.

Besonders vorteilhaft ist die erfindungsgemäße Fördervorrichtung, wenn der Schwellüberdruck zumindest 5 bar beträgt. Der Schwellüberdruck ist hier jeweils als Druck oberhalb des Umgebungsdrucks, also relativ in Bezug auf den Umgebungsdruck angegeben. Üblicherweise liegen Förderdrücke bei der Fördervorrichtungen unter 5 bar. Möglich ist allerdings auch, dass größere Förderdrücke angewendet werden, beispielsweise bis zu maximal 10 bar oder sogar bis zu maximal 15 bar. Sinnvoll wäre beispielsweise, den Schwellüberdruck so einzustellen, dass er minimal 1 bar oberhalb des maximalen Förderdrucks der Fördervorrichtung liegt.

Besonders vorteilhaft ist die erfindungsgemäße Fördervorrichtung, wenn das mindestens eine zweite Kompensationselement das Gesamtvolumen um bis zu 15 % vergrößern kann. Bevorzugt ist, dass das zweite Kompensationselement das Gesamtvolumen um maximal zwischen 2 bis 15 %, insbesondere maximal zwischen 3 bis 10 % vergrößern kann. Es wurde experimentell herausgefunden, dass derartige Volumenvergrößerungen beim Einfrieren von Reduktionsmittel regelmäßig auftreten können. Bevorzugt ist, dass genau nur ein zweites Kompensationselement vorgesehen ist, das dies schafft.

Weiterhin besonders vorteilhaft ist die erfindungsgemäße Fördervorrichtung, wenn das mindestens eine zweite Kompensationselement das Gesamtvolumen bei Erreichen des Schwellüberdrucks im Wesentlichen abrupt vergrößert. Durch eine derartige abrupte (plötzliche, sofortige) Vergrößerung werden die in der Fördervorrichtung auftretenden Eisdrücke während des Einfrierens nicht größer, als der Schwellüberdruck. Es ist auch möglich, dass das zweite Kompensationselement derart aufgebaut ist, das bei Erreichen des Überdruckes gleichzeitig zur abrupten Vergrößerung des Gesamtvolumens eine abrupte Reduktion des Drucks in der Fördervorrichtung eintritt. Bei einem derartigen zweiten Kompensationselement stellt sich bei Erreichen des Schwellüberdruckes eine stabile Gleichgewichtslage ein, so dass sich trotz des plötzlichen Druckabfalls das Gesamtvolumen nicht wieder verkleinert.
Zudem bzw. alternativ kann oberhalb des Schwellüberdrucks mit einem weiteren Druckanstieg eine kontinuierliche Vergrößerung des Gesamtvolumens auftreten. Bei einer derartigen Ausgestaltung würde sich der Druck in der Fördervorrichtung oberhalb des Schwellüberdruckes jedoch noch weiter steigern.

Besonders vorteilhaft ist die erfindungsgemäße Fördervorrichtung auch, wenn das mindestens eine zweite Kompensationselement nach Art einer unter Vorspannung stehenden Teilfläche ausgebildet ist, wobei die Teilfläche bei einem Überdruck oberhalb eines Schwellüberdruckes entgegen der Vorspannung bewegbar ist, so dass sich das Gesamtvolumen vergrößert. Eine unter Vorspannung stehende Teilfläche verhält sich typischerweise wie ein Knackfrosch. Wenn sie entgegen der Vorspannung mit einer bestimmten Kraft, beziehungsweise mit einem bestimmten auf die Teilfläche wirkenden Druck beaufschlagt wird, schnappt sie schlagartig um, so dass eine plötzliche Volumenvergrößerung auftritt. Regelmäßig ist es sinnvoll, dass sich die Teilfläche bei einem plötzlichen Umschnappen gegen einen Anschlag bewegt, und an diesem anliegt, ohne eine weitere stabile Position zu erreichen. Aus einer weiteren stabilen Position könnte die Teilfläche nur unter Einwirkung eines entsprechenden Gegendruckes oder einer entsprechenden Gegenkraft zurück in die ursprüngliche vorgespannte Position gelangen. Durch einen Anschlag kann die Teilfläche daran gehindert werden, eine weitere stabile Position zu erreichen, so dass die Teilfläche wieder in die vorgespannte Position zurück schnappt, wenn der Druck unter den Schwellüberdruck fällt.

Auch besonders vorteilhaft ist die erfindungsgemäße Fördervorrichtung, wenn das mindestens ein erstes Kompensationselement und mindestens ein zweites Kompensationselement gemeinsam als kombiniertes Kompensationselement ausgeführt sind. Beispielsweise ist es möglich, dass eine große und unter Vorspannung stehende Teilfläche als zweites Kompensationselement vorgesehen ist, und auf dieser Teilfläche direkt ein erstes Kompensationselement in Form einer Membran vorgesehen ist. Die unter Vorspannung stehende Teilfläche hat dann z. B. eine entsprechende Bohrung, damit Luft zwischen die Membran und die Teilfläche gelangen kann. Auch möglich ist, dass das erste Kompensationselement und das zweite Kompensationselement als kombiniertes Kompensationselement einzeln, in einem kompakt integrierten Bauteil ausgeführt sind.

Weiterhin vorteilhaft ist die erfindungsgemäße Fördervorrichtung, wenn das mindestens eine erste Kompensationselement zwischen Fördereinheit und Zugabeeinheit angeordnet ist. Zwischen Fördereinheit und Zugabeeinheit befindet sich regelmäßig der Hochdruckbereich einer Fördervorrichtung, weil der Druck in der Fördervorrichtung durch die Fördereinheit erzeugt und durch die Zugabeeinheit, welche das Reduktionsmittel in das Abgassystem einer Verbrennungskraftmaschine zuführt, abgebaut wird. Die Zugabeeinheit ist beispielsweise ein Injektor. Die Fördereinheit ist beispielsweise eine Pumpe. In diesem Hochdruckbereich befindet sich regelmäßig unter Druck stehendes Reduktionsmittel, das sich nicht in ein großes Volumen, beispielsweise den Tank, hinein ausdehnen kann. Besonders bevorzugt ist, dass das erste Kompensationselement nah (insbesondere unmittelbar angrenzend) an der Fördereinheit ausgebildet ist. Dann kann das Einfrieren, ausgehend von der Zugabeeinheit gerichtet in Richtung des ersten Kompensationselements, erfolgen, so dass sich kein Eispfropfen in der Fördervorrichtung bildet, der ein noch flüssiges Volumen an Reduktionsmittel von dem ersten Kompensationselement trennt, so dass das erste Kompensationselement seine kompensierende Wirkung nicht entfalten kann. Hier ist auch weiterhin als besonders vorteilhaft anzusehen, wenn das zweite Kompensationselement, soweit vorhanden, ebenfalls zwischen Fördereinheit und Zugabeeinheit nach Möglichkeit nahe an der Fördereinheit angeordnet vorgesehen ist.

Weiterhin erfindungsgemäß ist ein Verfahren zum Einfrieren von flüssigem Reduktionsmittel in einer Fördervorrichtung, die ein mit flüssigem Reduktionsmittel gefülltes Gesamtvolumen aufweist, aufweisend zumindest die folgenden Schritte:
a) Abkühlen des Reduktionsmittels in der Fördervorrichtung, wobei das Gesamtvolumen der Fördervorrichtung mit einem ersten Kompensationselement verkleinert wird, und
b) Einfrieren des Reduktionsmittels in der Fördervorrichtung, wobei das Gesamtvolumen der Fördervorrichtung mit einem zweiten Kompensationselement vergrößert wird.

Insbesondere wird das Gesamtvolumen der Fördervorrichtung in Schritt a) so verkleinert, dass kein Reduktionsmittel in die Fördervorrichtung nachströmt. Darüber hinaus ist die Volumenzunahme beim Einfrieren des Reduktionsmittels in Schritt a) regelmäßig größer ist als die Volumenverkleinerung beim Abkühlen in Schritt b).

Ein derartiges Verfahren kann insbesondere bevorzugt mit einer erfindungsgemäßen Fördervorrichtung durchgeführt werden. Besonders vorteilhaft beim erfindungsgemäßen Verfahren ist, dass die Volumenveränderungen der Fördervorrichtung immer definiert an entsprechenden Kompensationselementen durchgeführt werden, so dass keine unzulässigen Dehnungen und Spannungen in der Fördervorrichtung auftreten können.

Auch erfindungsgemäß ist ein Kraftfahrzeug, umfassend eine Verbrennungskraftmaschine und ein Abgassystem, welches zur Durchführung einer selektiven katalytischen Reduktion eingerichtet ist, und eine erfindungsgemäße Fördervorrichtung zur Förderung von Reduktionsmittel aus einem Reduktionsmitteltank in das Abgassystem.

Die für die erfindungsgemäße Fördervorrichtung geschilderten technischen Ausgestaltungen und Vorteile sind in analoger Weise für das erfindungsgemäße Verfahren und das erfindungsgemäße Kraftfahrzeug gültig und übertragbar. Gleiches gilt für die im Zusammenhang mit dem erfindungsgemäßen Kraftfahrzeug und dem erfindungsgemäßen Verfahren geschilderten Vorteile und besonderen technischen Ausgestaltungen, welche auf die erfindungsgemäße Vorrichtung anwendbar und auf diese übertragbar sind.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Figur 1:: ein Kraftfahrzeug aufweisend eine erste Ausführungsvariante der erfindungsgemäßen Fördervorrichtung;
- Figur 2:: ein Diagramm, welches das Einfrierverhalten der Fördervorrichtung zeigt;
- Figur 3:: eine Ausführungsvariante des ersten Kompensationselements;
- Figur 4:: eine Druck-/Volumenkennlinie einer Ausführungsvariante des ersten Kompensationselements;
- Figur 5:: eine Ausführungsvariante des zweiten Kompensationselements;
- Figur 6:: eine Druck-/Volumenkennlinie einer Ausführungsvariante des zweiten Kompensationselements;
- Figur 7:: eine Ausführungsvariante des kombinierten Kompensationselements;
- Figur 8:: eine Druck-/Volumenkennlinie einer Ausführungsvariante des kombinierten Kompensationselements;
- Figur 9:: eine weitere Ausgestaltung eines ersten Kompensationselementes; und
- Figur 10:: eine weitere Ausgestaltung eines ersten Kompensationselementes.

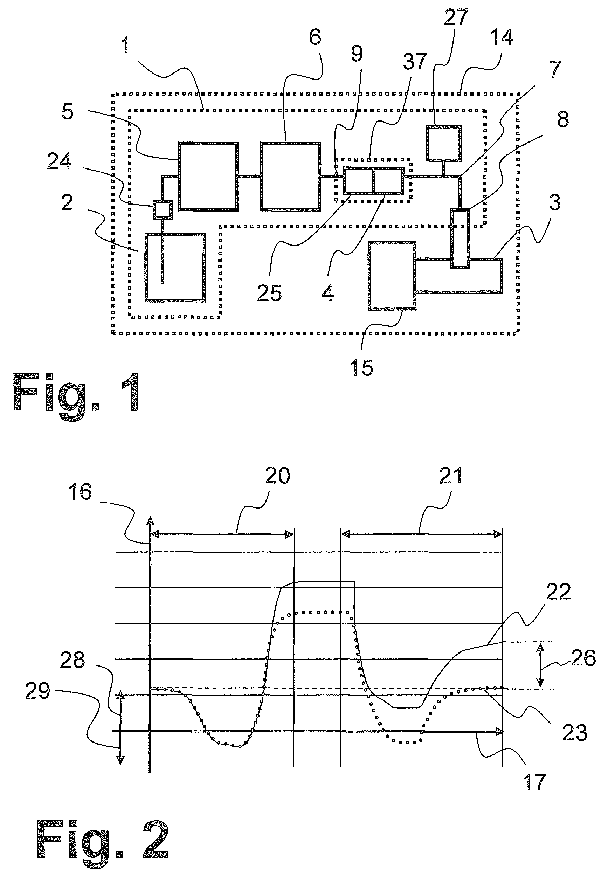

Fig. 1 zeigt ein Kraftfahrzeug 14, aufweisend eine Verbrennungskraftmaschine 15 mit einem Abgassystem 3. Das Abgassystem 3 weist eine Zugabeeinheit 8 zur Zugabe eines Reduktionsmittels (wässrige Harnstofflösung) in das Abgassystem 3 auf. Die Zugabeeinheit 3 erhält das Reduktionsmittel durch eine Fördervorrichtung 1 aus einem Reduktionsmitteltank 2. Vom Reduktionsmitteltank 2 gelangt das Reduktionsmittel durch die Reduktionsmittelleitung 7 zur Zugabeeinheit 8. Vom Reduktionsmitteltank 2 zur Zugabeeinheit 8 existieren entlang der Reduktionsmittelleitung 7 ein Strömungshindernis 24, ein Filter 5, eine Fördereinheit 6, ein erstes Kompensationselement 4 und ein Drucksensor 27. Die Reihenfolge der Komponenten kann teilweise von der hier beschriebenen Reihenfolge abweichen. Im Bereich des ersten Kompensationselementes 4 kann optional zusätzlich auch ein zweites Kompensationselement 25 oder ein kombiniertes Kompensationselement 37 vorhanden sein. Alle Komponenten der Fördervorrichtung 1 mit Ausnahme des Reduktionsmitteltanks 2 weisen zusammen ein Gesamtvolumen 9 auf. Auch möglich ist, dass das Gesamtvolumen 9 sich nur auf die Komponenten der Fördervorrichtung 1 bezieht, welche zwischen der Zugabeeinheit 8 und der Fördereinheit 6 angeordnet sind. Das erste Kompensationselement 4 ist dazu geeignet, das Volumen 9 der Fördervorrichtung 1 zu reduzieren, wenn in der Fördervorrichtung 1 ein Unterdruck vorliegt. Das erste Kompensationselement 4 wirkt mit dem Strömungshindernis 24 insofern zusammen, als das bei einem Unterdruck durch das erste Kompensationselement 4 das Gesamtvolumen 9 der Fördervorrichtung 1 leichter reduziert, als das durch das Strömungshindernis 24 zusätzliches Reduktionsmittel aus dem Reduktionsmitteltank 2 in die Fördervorrichtung 1 hinein gesaugt werden kann.

Fig. 2 zeigt in einem Diagramm in einer vereinfachten Darstellung, wie sich der Druck in einer erfindungsgemäßen Fördervorrichtung für ein Reduktionsmittel im Vergleich zum Druck in einer aus dem Stand der Technik bekannten Fördervorrichtung für ein Reduktionsmittel beim Einfrieren und beim Auftauen des enthaltenen Reduktionsmittels verhält. Auf der Druckachse 16 ist jeweils der im System vorliegende Reduktionsmitteldruck eingezeichnet. Aufgetragen ist dieser Druck über die Zeitachse 17. Oberhalb der Zeitachse 17 liegt Überdruck 28 vor, unterhalb der Zeitachse 17 liegt Unterdruck 29 vor. Die erste Kurve 22 gibt den Druck in einer aus dem Stand der Technik bekannten Fördervorrichtung wieder. Die zweite Kurve 23 gibt den Druck in einer erfindungsgemäßen Fördervorrichtung wieder. Zunächst ist ein Einfrierzeitraum 20 dargestellt. Beim Abkühlen des Reduktionsmittels tritt ein Unterdruck 29 aufgrund einer Volumenreduktion des Reduktionsmittels auf. Bei der aus dem Stand der Technik bekannten Fördervorrichtung gemäß der ersten Kurve 22 wird hier zusätzliches Reduktionsmittel aus dem Reduktionsmitteltank in die Fördervorrichtung hinein gesaugt. Bei der erfindungsgemäßen Fördervorrichtung gemäß der zweiten Kurve 23 wird diese Volumenabnahme durch ein erstes Kompensationselement kompensiert, so dass kein zusätzliches Reduktionsmittel in die Fördervorrichtung gelangt. Beim Einfrieren steigt der Druck sowohl in der aus dem Stand der Technik bekannten Fördervorrichtung als auch bei der erfindungsgemäßen Fördervorrichtung deutlich an. Der Druck in der aus dem Stand der Technik bekannten Fördervorrichtung steigt jedoch stärker an, weil in dieser Fördervorrichtung zusätzliches Reduktionsmittel vorhanden ist, welches durch den Unterdruck beim Einfrieren zuvor angesaugt wurde. In einem Auftauzeitraum 21 fällt in beiden Fördervorrichtungen der Druck zunächst stark ab. In der aus dem Stand der Technik bekannten Fördervorrichtung wird ein Unterdruck 29 jedoch nicht mehr erreicht, bzw. weniger stark erreicht, als bei der erfindungsgemäßen Fördervorrichtung, weil hier zusätzliches Volumen in die Fördervorrichtung hinein gesaugt wurde, welches jetzt nicht hinaustreten kann, weil die Ventile in der Fördereinheit lediglich eine Passage von Reduktionsmittel aus dem Reduktionsmitteltank hinaus in die Fördervorrichtung hinein und nicht anders herum ermöglichen. Dies liegt daran, dass es sich bei der Pumpe regelmäßig um eine Pumpe mit passiv wirkenden Ventilen handelt, bei der die Förderrichtung durch den Aufbau der Ventile vorgegeben ist. Somit entsteht beim Einfrieren und anschließendem Wiederauftauen des Reduktionsmittels in einer aus dem Stand der Technik bekannten Fördervorrichtung eine Drucksteigerung 26 des Druckes nach dem Wiederauftauen gegenüber dem vor dem Einfrieren vorliegenden Druck, bzw. gegenüber dem Druck in einer erfindungsgemäßen Fördervorrichtung.

Bei der Interpretation der Fig. 2 ist zu beachten, dass Fig. 2 lediglich eine vereinfachte Darstellung der Unterschiede zwischen aus dem Stand der Technik bekannten Fördervorrichtungen und der erfindungsgemäßen Fördervorrichtung ist. In dem Diagramm in Fig. 2 wurde nur der Einfluss des ersten Kompensationselementes auf das beim Abkühlen in die Vorrichtung gesaugte Reduktionsmittelvolumen und der Einfluss dieses Volumens auf den Druck in der Fördervorrichtung berücksichtigt. Real beeinflusst das erste Kompensationselement den Druck in der Fördervorrichtung auch direkt selbst. Beispielsweise kann der Druck beim Abkühlen nicht so weit abfallen wie bei aus dem Stand der Technik bekannten Fördervorrichtungen, weil dieser Druckabfall bereits durch das erste Kompensationselement verhindert wird.

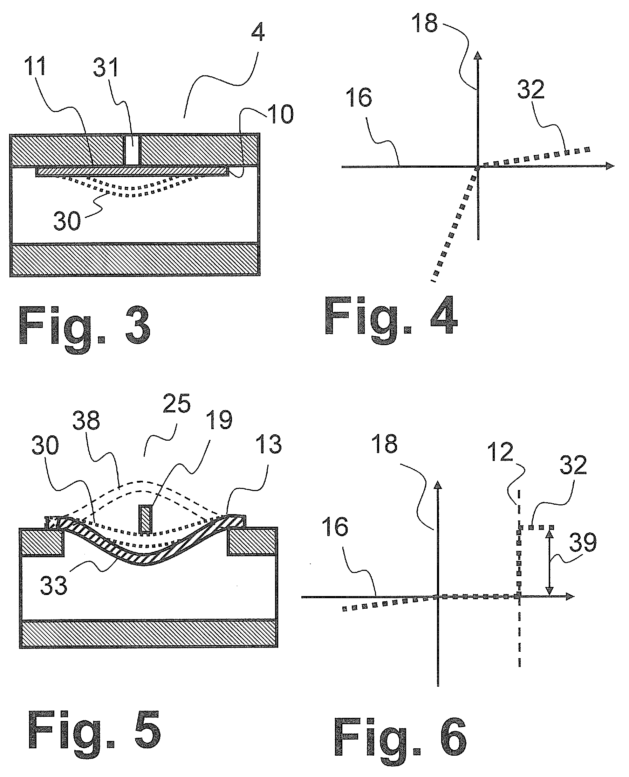

Fig. 3 zeigt ein erfindungsgemäßes erstes Kompensationselement 4, welches mit einer Membran 10 aufgebaut ist. Bei einem Überdruck liegt die Membran 10 an einer Anlagefläche 11 an. Bei einem Unterdruck wird die Membran 10 in eine ausgelenkte Position 30 ausgelenkt, wobei dann zwischen Membran 10 und Anlagefläche 11 Luft vorliegt und diese Luft durch eine Bohrung 31 angesaugt wird und später auch wieder austreten kann.

Fig. 4 zeigt eine Druck-/Volumenkurve 32 eines ersten Kompensationselementes gemäß der Figur 3. In dem Diagramm ist eine Druckachse 16 und eine Volumenachse 18 zu erkennen. Bei positiven Drücken steigert sich das Volumen gemäß der Druck-/Volumen-Kurve 32 nur geringfügig. Dies liegt daran, dass die Membran an einer Anlagefläche anliegt und sich nur sehr geringfügig verformen kann. Bei negativen Drücken bzw. Unterdrücken reduziert sich das Volumen gemäß der Druck-/Volumen-Kurve 32 stark. Dies liegt daran, dass die Membran sehr leicht in eine ausgelenkte Position bewegbar ist.

Fig. 5 zeigt ein zweites Kompensationselement 25. Bei einem zweiten Kompensationselement 25 existiert eine unter Vorspannung stehende Teilfläche 13, welche im normalen Betrieb aufgrund ihrer Vorspannung in einer vorgespannten Position 33 gehalten wird. Wird nun der Druck in der Fördervorrichtung erhöht, schnappt die vorgespannten Teilfläche 13 ab einem gewissen Druck in die ausgelenkte Position 30 um. Bevorzugt ist, dass die Teilfläche auch in der ausgelenkten Position 30 sich nicht vollständig umklappen kann, sondern an einem Anschlag 19 anliegt. So wird sichergestellt, dass die Teilfläche 13 nicht in eine stabile Gleichgewichtslage 38 gerät, die von der vorgespannten Position 33 abweicht und sich die Teilfläche 13 nur unter einer entsprechenden Gegenkraft zurückbewegen könnte.

Fig. 6 zeigt eine Druck-/Volumen-Kurve 32 eines zweiten Kompensationselements. Das Volumen ist auf der Volumenachse 18 über den auf der Druckachse 16 dargestellten Druck aufgetragen. Bei negativen Drücken verkleinert sich das Volumen nur geringfügig, weil die verhältnismäßig starre Teilfläche sich aufgrund der wirkenden Kräfte nur geringfügig ausdehnt. Bei positiven Drücken verharrt die Teilfläche in ihrer vorgespannten Position, so dass im Wesentlichen keine Volumenausdehnung auftritt. Bei Drücken oberhalb eines Schwellüberdrucks 12 schlägt die Membran plötzlich in die ausgelenkte Position um, so dass eine abrupte Volumenvergrößerung 39 eintritt. Bei Drücken oberhalb des Schwellüberdrucks 12 tritt keine wesentliche weitere Volumenvergrößerung auf, weil die Teilfläche am Anschlag anliegt und sich nicht weiter verformen kann.

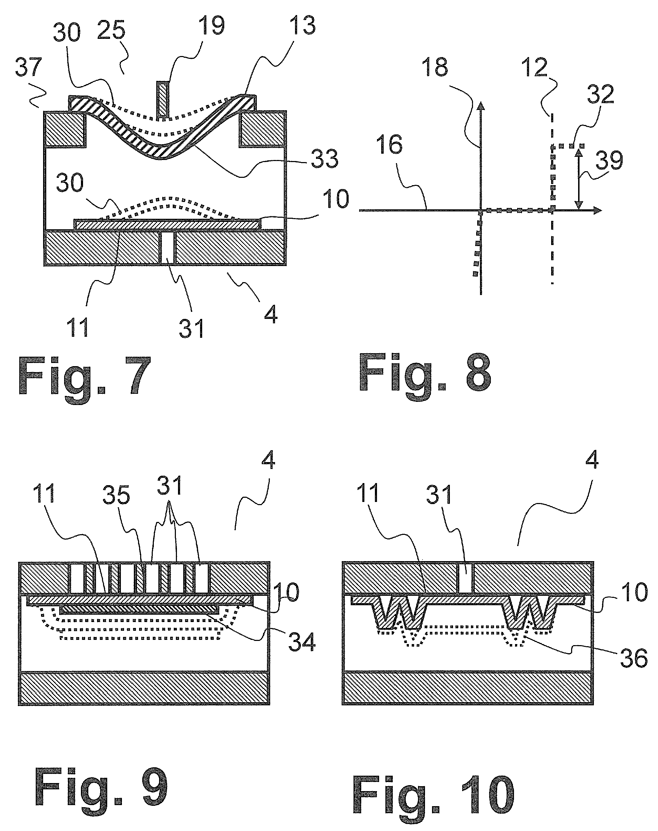

Fig. 7 zeigt ein kombiniertes Kompensationselement 37, bestehend aus einem ersten Kompensationselement 4 mit einer Membran 10, einer Anlagefläche 11 und einer Bohrung 31, wobei die Membran 10 in eine ausgelenkte Position 30 umklappen kann. Das zweite Kompensationselement 25 in der Fig. 7 besteht genauso aus einer Teilfläche 13 und einen Anschlag 19, wobei die Teilfläche 13 sich in einer vorgespannten Position 33 befindet und in eine ausgelenkte Position 30 umklappbar ist.

Fig. 8 zeigt eine Druck-/Volumenkurve 32 eines kombinierten Kompensationselementes gemäß der Fig. 7. Das Volumen ist auf der Volumenachse 18 über den Druck auf der Druckachse 16 aufgetragen. Die Druck-/Volumen-Kurve 32 in der Fig. 8 ergibt sich im Wesentlichen aus einer Superposition der Druck-/Volumen-Kurven aus den Fig. 4 und 6. Die Druck-/Volumen Kurve 32 weist eine starke Volumenverkleinerung bei Unterdrücken auf und ein im Wesentlichen konstantes Volumen bei Drücken zwischen einem neutralen Druck und einem Schwellüberdruck. Beim Schwellüberdruck 12 tritt eine abrupte Volumenvergrößerung 39 auf. In diesem Bereich ist auch der Betriebsbereich der erfindungsgemäßen Fördervorrichtung so, dass die erfindungsgemäße Fördervorrichtung mit einem kombinierten Kompensationselement sich im Betriebsbereich im Wesentlichen starr verhält. Bei einem Schwellüberdruck 12 tritt eine plötzliche Volumenvergrößerung auf. Eine Druck-/Volumen-Kurve gemäß Fig. 8 ergibt sich immer, wenn ein erstes Kompensationselement und ein zweites Kompensationselement in einer erfindungsgemäßen Fördervorrichtung vorhanden sind. Hierzu ist es nicht notwendig, dass beide als kombiniertes Kompensationselement ausgeführt sind.

In Fig. 9 ist eine alternative Gestaltung eines ersten Kompensationselementes 4 gezeigt. Auch hier liegt eine Membran 10 bei einem in der erfindungsgemäßen Fördervorrichtung vorliegenden Überdruck an einer Anlagefläche 11 an. Anstatt einer Bohrung 31 ist hier ein Gitter 35 ausgebildet, welches beispielsweise aus mit einer Vielzahl von Bohrungen 31 gebildet sein kann. Zusätzlich ist die Membran 10 mit einer Versteifungsstruktur 34 versehen, so dass die Membran 10 bei einem in der Fördervorrichtung vorliegenden Unterdruck in eine ausgelenkte Position 30 bewegbar ist, jedoch eine Verformung der Membran 10 in Richtung des Gitters 35 zusätzlich erschwert wird.

Bei der Ausgestaltung des ersten Kompensationselementes 4 gemäß der Fig. 10 existiert ebenfalls eine Membran 10 mit einer Anlagefläche 11 und einer Bohrung 31 in der Anlagefläche 11, wobei die Membran 10 in eine ausgelenkte Position 36 bewegbar ist. Um die Beweglichkeit der Membran 10 zu erhöhen, ist hier an der Membran 10 eine Wellung 36 vorgesehen, durch welche die Membran 10 bei einem Unterdruck in der erfindungsgemäßen Fördervorrichtung leichter in die erfindungsgemäße Fördervorrichtung bzw. das Gesamtvolumen in eine ausgelenkte Position 30 hinein bewegbar ist.

### Bezugszeichenliste

- 1: Fördervorrichtung
- 2: Reduktionsmitteltank
- 3: Abgassystem
- 4: erstes Kompensationselement
- 5: Filter
- 6: Fördereinheit
- 7: Reduktionsmittelleitung
- 8: Zugabeeinheit
- 9: Gesamtvolumen
- 10: Membran
- 11: Anlagefläche
- 12: Schwellüberdruck
- 13: Teilfläche
- 14: Kraftfahrzeug
- 15: Verbrennungskraftmaschine
- 16: Druckachse
- 17: Zeitachse
- 18: Volumenachse
- 19: Anschlag
- 20: Einfrierzeitraum
- 21: Auftauzeitraum
- 22: erste Kurve
- 23: zweite Kurve
- 24: Strömungshindernis
- 25: zweites Kompensationselement
- 26: Drucksteigerung
- 27: Drucksensor
- 28: Überdruck
- 29: Unterdruck
- 30: ausgelenkte Position
- 31: Bohrung
- 32: Druck-/Volumen-Kurve
- 33: vorgespannte Position
- 34: Versteifungsstruktur
- 35: Gitter
- 36: Wellung
- 37: kombiniertes Kompensationselement
- 38: stabile Gleichgewichtslage
- 39: abrupte Volumenvergrößerung

## Patentansprüche

1. Fördervorrichtung (1) zur Förderung von flüssigem Reduktionsmittel mit zumindest einem ersten Kompensationselement (4), wobei die Fördervorrichtung (1) zur Förderung, Leitung und Zugabe eines Reduktionsmittels wenigstens einen Reduktionsmitteltank (2), eine Fördereinheit (6) sowie eine Reduktionsmittelleitung (7) und eine Zugabeeinheit (8) umfasst, die zusammen ein mit Reduktionsmittel befüllbares Gesamtvolumen (9) aufweisen, wobei das mindestens eine erste Kompensationselement (4) dazu geeignet ist das Gesamtvolumen (9) bei einem Unterdruck in der Fördervorrichtung (1) zu verkleinern, **dadurch gekennzeichnet, dass** das erste Kompensationselement (4) so ausgebildet ist, dass bei Überdruck in der Fördervorrichtung (1) durch das erste Kompensationselement (4) im Wesentlichen keine Vergrößerung des Gesamtvolumens (9) erfolgt, und dass mindestens ein zweites Kompensationselement (25) existiert, welches dazu geeignet ist, das Gesamtvolumen (9) bei Erreichen eines Schwellüberdrucks (12) in der Fördervorrichtung zu vergrößern, wobei das mindestens eine zweite Kompensationselement (25) bei einem Druck unterhalb des Schwellüberdrucks (12) im Wesentlichen keine Vergrößerung des Gesamtvolumens (9) ermöglicht.

2. Fördervorrichtung (1) nach Patentanspruch 1, wobei das mindestens eine erstes Kompensationselement (4) nach Art einer Membran (10) ausgeführt ist, für die eine Anlagefläche (11) vorgesehen ist, die so ausgebildet ist, dass die Membran (10) bei Überdruck in der Fördervorrichtung (1) im wesentlichen unbeweglich an dieser Anlagefläche (11) anliegt und die Membran (10) bei einem Unterdruck in der Fördervorrichtung (1) in das Gesamtvolumen (9) hinein bewegbar ist.

3. Fördervorrichtung (1) nach einem der vorhergehenden Patentansprüche, wobei das mindestens eine erste Kompensationselement (4) eine Verkleinerung des Gesamtvolumens (9) um bis zu 5 % ermöglicht.

4. Fördervorrichtung (1) nach einem der vorhergehenden Patentansprüche, wobei das mindestens eine erste Kompensationselement (4) eine Verkleinerung des Gesamtvolumens (9) um bis zu 5 % bei einem Unterdruck von weniger als 500 mbar ermöglicht.

5. Fördervorrichtung (1) nach einem der vorhergehenden Patentansprüche, wobei der Schwellüberdruck (12) zumindest 5 bar beträgt.

6. Fördervorrichtung (1) nach einem der vorhergehenden Patentansprüche, wobei das mindestens eine zweite Kompensationselement (25) das Gesamtvolumen (9) um bis zu 15 % vergrößern kann.

7. Fördervorrichtung (1) nach einem der vorhergehenden Patentansprüche, wobei das mindestens eine zweite Kompensationselement (25) das Gesamtvolumen (9) bei Erreichen des Schwellüberdrucks (12) im Wesentlichen abrupt vergrößert.

8. Fördervorrichtung (1) nach einem der vorhergehenden Patentansprüche, wobei das mindestens eine zweite Kompensationselement (25) nach Art einer unter Vorspannung stehenden Teilfläche (13) ausgebildet ist, wobei die Teilfläche (13) bei einem Überdruck oberhalb eines Schwellüberdrucks (12) entgegen der Vorspannung bewegbar ist, so dass sich das Gesamtvolumen (9) vergrößert.

9. Fördervorrichtung (1) nach einem der vorhergehenden Patentansprüche, wobei das mindestens ein erstes Kompensationselement (4) und mindestens ein zweites Kompensationselement (25) gemeinsam als kombiniertes Kompensationselement ausgeführt sind.

10. Fördervorrichtung (1) nach einem der vorhergehenden Patentansprüche, wobei das mindestens eine erste Kompensationselement (4) zwischen Fördereinheit (6) und Zugabeeinheit (8) angeordnet ist.

11. Verfahren zum Einfrieren von flüssigem Reduktionsmittel in einer Fördervorrichtung (1), die ein mit flüssigem Reduktionsmittel gefülltes Gesamtvolumen (9) aufweist, aufweisend zumindest die folgenden Schritte:
a) Abkühlen des Reduktionsmittels in der Fördervorrichtung (1), wobei das Gesamtvolumen (9) der Fördervorrichtung (1) mit einem ersten Kompensationselement (4) verkleinert wird; und
b) Einfrieren des Reduktionsmittels in der Fördervorrichtung (1), wobei das Gesamtvolumen (9) der Fördervorrichtung (1) mit einem zweiten Kompensationselement (25) vergrößert wird.

12. Kraftfahrzeug (14) umfassend eine Verbrennungskraftmaschine (15) und ein Abgassystem (3), welches zur Durchführung einer selektiven katalytischen Reduktion eingerichtet ist und eine Fördervorrichtung (1) zur Förderung von Reduktionsmittel aus einem Reduktionsmitteltank (2) in das Abgassystem (3) gemäß einem der Patentansprüche 1 bis 10 aufweist.

## Claims

1. Delivery device (1) for delivering liquid reducing agent, having at least one first compensation element (4), wherein for delivering, conducting and metering a reducing agent, the delivery device (1) comprises a reducing agent tank (2), a delivery unit (6) and also a reducing agent line (7) and a metering unit (8), which together have an overall volume (9) that can be filled with reducing agent, wherein the at least one first compensation element (4) is suitable for reducing the size of the overall volume (9) when a negative pressure prevails in the delivery device (1), **characterized in that** the first compensation element (4) is designed such that, when a positive pressure prevails in the delivery device (1), substantially no increase of the overall volume (9) is realized by way of the first compensation element (4), and **in that** there is at least one second compensation element (25) which is suitable for increasing the size of the overall volume (9) when a threshold positive pressure (12) is reached in the delivery device, wherein when a pressure below the threshold positive pressure (12) prevails, the at least one second compensation element (25) permits substantially no increase in size of the overall volume (9).

2. Delivery device (1) according to Patent Claim 1, wherein the at least one first compensation element (4) is designed in the form of a diaphragm (10), for which there is provided a contact surface (11) designed such that, when a positive pressure prevails in the delivery device (1), the diaphragm (10) bears substantially immovably against said contact surface (11) and, when a negative pressure prevails in the delivery device (1), the diaphragm (10) can move into the overall volume (9).

3. Delivery device (1) according to one of the preceding patent claims, wherein the at least one first compensation element (4) permits a reduction in size of the overall volume (9) by up to 5%.

4. Delivery device (1) according to one of the preceding patent claims, wherein the at least one first compensation element (4) permits a reduction in size of the overall volume (9) by up to 5% at a negative pressure of lower than 500 mbar.

5. Delivery device (1) according to one of the preceding patent claims, wherein the threshold positive pressure (12) is at least 5 bar.

6. Delivery device (1) according to one of the preceding patent claims, wherein the at least one second compensation element (25) can increase the size of the overall volume (9) by up to 15%.

7. Delivery device (1) according to one of the preceding patent claims, wherein the at least one second compensation element (25) increases the size of the overall volume (9) substantially abruptly when the threshold positive pressure (12) is reached.

8. Delivery device (1) according to one of the preceding patent claims, wherein the at least one second compensation element (25) is designed in the form of a surface part (13) under preload, wherein when a positive pressure above a threshold positive pressure (12) prevails, the surface part (13) can move counter to the preload, such that the overall volume (9) increases in size.

9. Delivery device (1) according to one of the preceding patent claims, wherein the at least one first compensation element (4) and at least one second compensation element (25) are formed jointly as a combined compensation element.

10. Delivery device (1) according to one of the preceding patent claims, wherein the at least one first compensation element (4) is arranged between the delivery unit (6) and metering unit (8).

11. Method for the freezing of liquid reducing agent in a delivery device (1) which has an overall volume (9) filled with liquid reducing agent, having at least the following steps:
a) cooling of the reducing agent in the delivery device (1), wherein the overall volume (9) of the delivery device (1) is decreased in size by means of a first compensation element (4); and
b) freezing of the reducing agent in the delivery device (1), wherein the overall volume (9) of the delivery device (1) is increased in size by means of a second compensation element (25).

12. Motor vehicle (14) comprising an internal combustion engine (15) and an exhaust system (3) designed for carrying out a selective catalytic reduction and a delivery device (1) for delivering reducing agent out of a reducing agent tank (2) into the exhaust system (3), according to one of Patent Claims 1 to 10.

## Revendications

1. Ensemble (1) de transport destiné à transporter un agent réducteur liquide et présentant au moins un premier élément de compensation (4), l'ensemble de transport (1) comprenant pour le transport, la conduite et la fourniture d'un agent de réduction au moins une cuve (2) à agent de réduction, une unité de transport (6), un conduit (7) d'agent de réduction et une unité de fourniture (8) qui présentent ensemble un volume global (9) qui peut être rempli d'agent de réduction, le ou les premiers éléments de compensation (4) convenant pour diminuer le volume global (9) lorsque l'ensemble de transport (1) est en dépression, **caractérisé en ce que**
l'élément de compensation (4) est configuré de telle sorte que l'élément de compensation (4) n'entraîne essentiellement aucune augmentation du volume global (9) en cas de surpression dans l'ensemble de transport (1) et
**en ce qu'**au moins un deuxième élément de compensation (25) est prévu et convient pour augmenter le volume global (9) lorsqu'une surpression de seuil (12) est atteinte dans l'ensemble de transport et
**en ce que** le ou les deuxièmes éléments de compensation (25) ne permettent essentiellement aucune augmentation du volume global (9) lorsque la pression est inférieure à la surpression de seuil (12).

2. Ensemble de transport (1) selon la revendication 1, dans lequel le ou les premiers éléments de compensation (4) sont réalisés sous la forme d'une membrane (10) pour laquelle une surface de pose (11) est prévue et sont configurés de telle sorte que la membrane (10) repose de façon essentiellement immobile sur cette surface de pose (11) en cas de surpression dans l'ensemble de transport (1) et que la membrane (10) puisse être déplacée pour pénétrer dans le volume global (9) cas de dépression dans l'ensemble de transport (1).

3. Ensemble de transport (1) selon l'une des revendications précédentes, dans lequel le ou les premiers éléments de compensation (4) permettent une diminution du volume global (9) qui peut atteindre 5 %.

4. Ensemble de transport (1) selon l'une des revendications précédentes, dans lequel le ou les premiers éléments de compensation (4) permettent une diminution du volume global (9) qui peut atteindre 5 % lorsque la dépression est inférieure à 500 mbars.

5. Ensemble de transport (1) selon l'une des revendications précédentes, dans lequel la surpression de seuil (12) est d'au moins 5 bars.

6. Ensemble de transport (1) selon l'une des revendications précédentes, dans lequel le ou les deuxièmes éléments de compensation (25) augmentent le volume global (9) jusqu'à 15 %.

7. Ensemble de transport (1) selon l'une des revendications précédentes, dans lequel le ou les deuxièmes éléments de compensation (25) augmentent de manière essentiellement abrupte le volume global (9) lorsque la surpression de seuil (12) est atteinte.

8. Ensemble de transport (1) selon l'une des revendications précédentes, dans lequel le ou les deuxièmes éléments de compensation (25) sont configurés sous la forme d'une surface partielle (13) placée sous précontrainte, la surface partielle (13) pouvant être déplacée en opposition à la précontrainte lorsque la surpression est supérieure à une surpression de seuil (12) de telle sorte que le volume global (9) augmente.

9. Ensemble de transport (1) selon l'une des revendications précédentes, dans lequel le ou les premiers éléments de compensation (4) et le ou les deuxièmes éléments de compensation (25) sont réalisés conjointement sous la forme d'un élément de compensation combiné.

10. Ensemble de transport (1) selon l'une des revendications précédentes, dans lequel le ou les premiers éléments de compensation (4) sont disposés entre l'unité de transport (6) et l'unité de fourniture (8).

11. Procédé de congélation d'un agent de réduction liquide dans un ensemble de transport (1) qui présente un volume global (9) rempli d'un agent de réduction liquide, le procédé présentant au moins les étapes suivantes:
a) refroidissement de l'agent de réduction dans l'ensemble de transport (1), le volume global (9) de l'ensemble de transport (1) étant diminué au moyen d'un premier élément de compensation (4) et
b) congélation de l'agent de réduction dans l'ensemble de transport (1), le volume global (9) de l'ensemble de transport (1) étant augmenté à l'aide d'un deuxième élément de compensation (25).

12. Véhicule automobile (14) comprenant un moteur à combustion interne (15) et un système (3) de gaz d'échappement et présentant un ensemble de transport (1) selon l'une des revendications 1 à 10, qui transporte un agent de réduction depuis une cuve (2) à agent de réduction jusque dans le système (3) de gaz d'échappement en vue de l'exécution d'une réduction catalytique sélective.
